# EUROPEAN PATENT SPECIFICATION

(11) **EP 2 773 910 B1**
(45) Date of publication and mention of the grant of the patent: **31.10.2018**
(21) Application number: 12833259.0
(22) Date of filing: 20.09.2012
(51) Int. Cl.: F16L 9/00, F16L 9/128, F16L 9/17, F16L 11/02, F24F 13/02

(54) **DUCT AND A METHOD FOR ITS MANUFACTURE**
KANAL UND VERFAHREN ZU SEINER HERSTELLUNG
CONDUIT ET PROCÉDÉ POUR SA FABRICATION

(30) Priority: 22.09.2011 SE 1100696
(43) Date of publication of application: 10.09.2014
(73) Proprietor: Climate Recovery Ind Ab, 391 21 Kalmar (SE)
(72) Inventor: WALLIN, Peter, S-394 77 Kalmar (SE); BERNHARDSSON, Göran, SE-391 21 Kalmar (SE)
(74) Representative: Noréns Patentbyrå AB
(86) International application number: PCT/SE2012/000143
(87) International publication number: WO 2013/043101

(56) References cited:
- EP-A1- 2 053 320
- WO-A1-2009/145698
- WO-A1-2009/145698
- WO-A1-2011/048105
- DE-A1- 1 454 582
- DE-B1- 1 450 312
- ES-A1- 2 286 913
- FR-A- 1 211 058
- US-A- 3 251 382
- US-A- 3 793 131
- US-A- 3 818 948
- US-A- 3 818 948

## Description

### TECHNICAL FIELD

The present invention relates to a duct, which comprises a number of longitudinal wall sections at least partly produced from a refractory fibre material and a binder agent, which together define a closed, elongate flow space, mutually meeting wall sections being united by the intermediary of at least one fold or joint line.

The present invention also relates to a method of manufacturing a first and a second embodiment of a duct with a number of longitudinal wall sections and, between pairwise of these wall sections, longitudinal fold or joint lines, the duct being manufactured from a binder agent and at least one web, composed of one or more layers, consisting of a refractory fibre material which is compressed.

### BACKGROUND ART

As regards ventilation ducts, increasingly higher demands are placed on large cross sectional areas with a view to reducing the flow resistance and thereby energy consumption. Such large dimensions as 600-700 mm x 300-400 mm have been mentioned as relevant. Further, increasingly stringent demands are placed on the ability of the ventilation duct to withstand partial vacuum of at least 200 Pa, as well as partial vacuum surges of 750 Pa. Needs to be able to withstand as large partial vacuum as 1200 Pa have also been expressed. Another important need placed on ventilation ducts is an extremely good insulation capability, in particular when the ventilation duct is employed for heating purposes or in order to satisfy requirements on air conditioning. Regardless of the field of use, a high level of insulation capability is of value as regards energy economy.

Another aspect of ventilation ducts which has become increasingly important is the possibility to classify the resistance of the duct to fire. One such applicable class is E1 15 and entails, if it is satisfied, that a ventilation duct awarded fire classification in this way must withstand 15 min. in a fire environment without losing its operational function. Naturally, considerably stricter classifications are also in place.

WO 2009/145698 discloses a ventilation duct which is manufactured from fibre material and binder agent. The illustrated embodiment has four-sided cross section, quadratic or rectangular, and as a result has four longitudinal wall sections. Each one of these wall sections displays transverse rigidifying elements in the form of impressions, where the quantity per volume unit of fibres and binder agent is considerably higher than that which applies to the rest of the wall sections.

The wall sections are interconnected with one another in the corners of the ventilation duct, where there are provided fold lines so that the ventilation duct may be flattened out to a substantially planar state and thereafter be rolled up for compact storage and transport. Cutting of the duct into relevant lengths also takes place most simply in the flattened state of the duct.

The prior art duct displays small outer dimensions and, for this reason, withstands partial vacuum relatively well. On the other hand, the insulation capability is not anywhere near in parity with those demands which are placed by the market today, neither as regards low energy losses nor fire safety.

Nor can the prior art ventilation duct be scaled up to such large dimensions as are desirable today without considerable problems occurring. The reason for this is that, in the fibre material employed, there are differences or unevenness which entail that the ventilation duct will have places which are weaker than their surroundings. Such weaker areas will have a consequence that, on rough treatment, the ventilation duct will have a tendency to give way or, in the event of partial vacuum, to buckle inwards at the weakened points. If the ventilation duct has once given way, it becomes even weaker.

To sum up, it may be said about the prior art ventilation duct that it cannot be scaled up to larger dimensions and still withstand considerable partial vacuum. Nor does it provide sufficient insulation effect as regards thermal passage through the wall sections or fire safety of the duct.

USPS 3,818,948 also shows a ventilation duct which comprises a fibre material. This ventilation duct also displays rectangular cross section, where the corner regions between mutually meeting longitudinal walls are joined together and sealed by means of flexible sealing strips.

According to the US Patent Specification, each wall has a number of transverse rigidifying elements, for example consisting of metal wires. The duct according to the US Patent Specification may also be flattened out to substantially planar state for compact storage and transport. Despite the presence of the transverse reinforcements in the walls of the duct, it lacks the capability of being self-supporting, since it may easily be compressed together in the longitudinal direction, and in addition cannot be expected to withstand greater partial vacuum without the cross section of the duct collapsing.

The duct according to the US Patent Specification is wholly unsatisfactory as regards fire safety, since, in its corner regions, it is joined together by means of sealing and joining strips which, after only a very brief time in a fire environment, would melt or combust.

### PROBLEM STRUCTURE

The present invention has for its object regarding the duct to design the duct such that the drawbacks which were considered above are obviated or at least considerably reduced. Otherwise expressed, the present invention has for its object to design the duct intimated by way of introduction such that it may be manufactured with large cross sectional areas and moreover with a capability of withstanding partial vacuum sufficiently, even in the form of partial vacuum surges. Further, the present invention has for its object to design the duct so that its resistance to fire and its thermal insulation are considerably improved compared with the prior art technology.

As regards the methods of manufacturing both of the embodiments of the duct, the present invention has for its object to realise a simple and convenient method of manufacture which gives a result analogous with that described above.

### SOLUTION

The object forming the basis of the present invention will be attained in respect of the duct, if the duct is given the characterising features as set forth in the appended Claim 1.

The object forming the basis of the present invention will be attained concerning the methods of manufacture of the two embodiments of the duct, if the methods are given the characterising features as set forth in the appended Claim 11 and 13, respectively.

### BRIEF DESCRIPTION OF THE ACCOMPANYING DRAWINGS

The present invention will now be described in greater detail hereinbelow, with reference to the accompanying Drawings. In the accompanying Drawings:
Fig. 1 shows in perspective a short section of a duct according to the present invention of hexagonal cross section, and a longitudinal joint;
Fig. 2 is an end elevation of the duct according to Fig. 1;
Fig. 3 shows the duct according to Figs. 1 and 2 in the flattened state; and
Fig. 4 shows a duct according to the present invention of rectangular cross section and without longitudinal joint.

### DESCRIPTION OF PREFERRED EMBODIMENT

The duct according to the present invention is principally intended to be employed as a ventilation duct, both in excess pressure and partial vacuum, but may naturally also be employed for other purposes. Further, the duct may be given large cross sectional areas and different cross sectional configurations without problems arising.

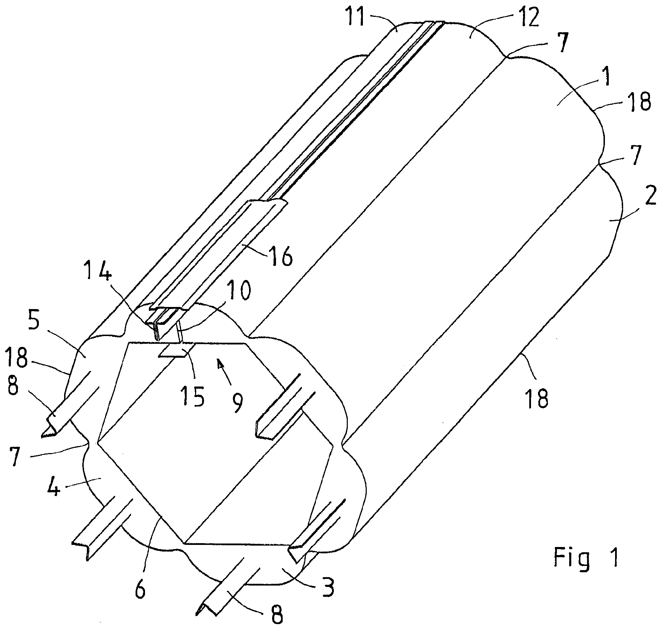

Fig. 1 shows a first embodiment of the subject matter of the present invention, which in this embodiment displays a regular hexagonal cross sectional configuration. The duct comprises six different wall sections 1-5 and an additional wall section 9 of a different design. The wall sections have preferably planar, inner surfaces, which are covered by a sealing layer 6 which is impermeable to gases, primarily water vapour.

However, the duct according to Fig. 1 may also be arranged so that it has a rectangular cross section, with two wall sections 1-5, 9 in the longitudinal sides of the cross section and only one wall section 1-5 in the short sides of the cross section.

The wall sections 1-5, 9 are manufactured from a binder agent and a refractory fibre material, such as glass fibre, mineral wool or the like. The binder agent fulfils the function of bonding together the individual fibres so that they form a continuous web, which constitutes the body of the wall sections. The above-mentioned sealing layer 6 is fixed on the insides of the wall sections 1-5, 9 with the aid of an adhesive or a binder agent, which preferably may be the same binder agent as is employed for bonding together the fibres included in the wall sections 1-5, 9. As material in the sealing layer 6, a plastic foil of suitable quality may be employed.

The outsides of the wall sections 1-5 may also be provided with a sealing layer, even if this is not necessary in all situations. However, in such practical applications where the duct is at a lower temperature than the ambient temperature, in particular if this is at high relative humidity, it is suitable also to provide the outer surfaces 18 of the duct with a sealing layer with a view to preventing the penetration of damp in the wall sections and possible condensation inside them.

As was mentioned above, the duct is manufactured from binder agent and fibres. Suitably, these fibres are provided in one or more layers which are laid on one another and which together form a web of quite considerable thickness, where the relevant thickness is naturally dependent upon the dimensions which the completed duct is to have.

On manufacture, the above-mentioned web is compressed together so that the binder agent comes into good contact with the fibres and bonds them together. The compression of the fibre web takes place to the desired density and thickness, which implies that in practice the duct may be of different density in different portions. Otherwise expressed, the duct may also have different wall thickness in different sections.

Between the above-mentioned wall sections 1-5, the duct has longitudinal fold- or joint lines 7, which unite adjacent wall sections and which are of one piece manufacture with them. It will be apparent from the figure that the wall sections 1-5 are of a considerable thickness, while on the other hand the fold- or joint lines have a considerably lesser wall thickness, in view of insulation and fire safety, normally of the order of magnitude of 5-10 mm, which is realised in that the degree of compression of the fibre material at the fold- or joint lines is considerably higher than is the case for the surrounding wall sections. Otherwise expressed, this implies that the fold- or joint lines possess a considerably greater proportion of fibres and binder agent calculated per volume unit than that which applies for the wall sections 1-5.

If, from the outset, the duct is pressed in the planar, spread out state in order subsequently to be formed into hexagonal, rectangular or circular configuration, the outer circumference will be longer than the inner circumference. This entails that a shearing occurs between the fibres, with the result that the fibre material is delaminated and the fibres are separated from one another in an undesirable manner. This may be avoided in two different ways.

According to a first method, the duct is, already from the outset, pressed in that configuration which is desired.

According to a second method, the longitudinal wall sections 1-5, 9 are pressed and processed in such a manner that they remain relatively intact when the duct is given its intended configuration. Consequently, the fold- and joint lines 7 are pressed and processed in such a manner that the wall sections will be "released" from one another, whereby they retain their configuration regardless of how the duct is folded or assembled. This is put into effect with a normal thickness in the fold- or joint lines of approx. 5-10 mm. A combination of increased compression of the fibres and a mechanical processing, where the fibres are crushed or disengaged from one another, results in the above-mentioned "release" of the wall sections from one another.

There are disposed, interiorly in the fibre material of the wall sections 1-5, longitudinal rigidifying elements 8. The rigidifying elements are manufactured from a refractory material, or at least a material which withstands high temperatures, and may for example consist of thin metal profiles.

Fig. 1 shows the rigidifying elements 8 as V-shaped metal profiles, but such a cross sectional configuration is not necessary, the rigidifying elements may instead have circular cross section, I- or H-shaped cross section or merely cross sections which have a greater extent in the radial direction than in the circumferential direction.

On the application of the rigidifying elements 8 interiorly in the wall sections 1-5, these are generally positioned in the non-compressed fibre material in the wall sections, preferably between the layers which together build up the wall sections. On the compression of the fibre material and the binder agent, the binder agent will therefore come into contact with the rigidifying elements 8 and give rise to bonding between them and the surrounding fibre material.

It will further be apparent from Fig. 1 that the wall sections 1-5 have longitudinal, thickened and outwardly bulging portions 17 with outer defining surfaces 18 which are arched convex outwards so that the material thickness in the central region of a wall section is considerably greater than that which applies in connection with the fold- or joint lines 7. The figure shows a gently arched, outwardly convex contour, which is advantageous in view of the manufacturing technology employed. Further, the interior surfaces of the wall sections are substantially planar. In one practical example of dimensioning of a wall section 1-5, the thickness may be from 20 to 40 % or the width of the relevant wall section, hence the dimension between neighbouring fold- or joint lines. In absolute dimensions, the thickness of the wall sections is suitably from 25 to 30 mm, possibly more, which affords a superior thermal insulation and good resistance to fire.

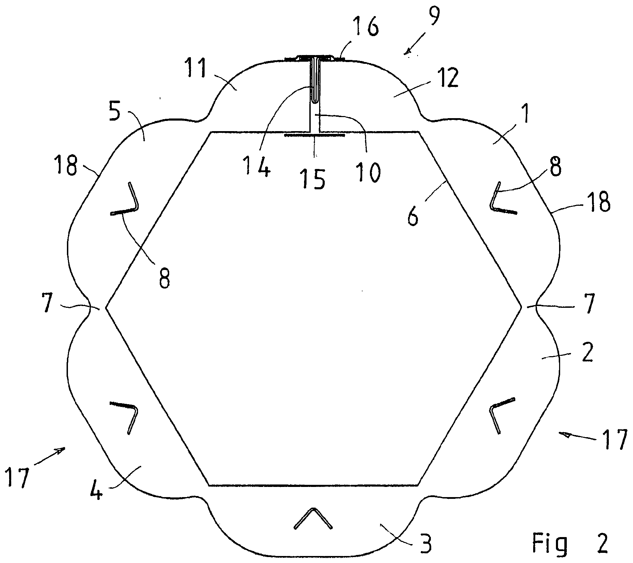

It will be apparent from Figs. 1 and 2 that a wall section 9 included in the duct is divided with a longitudinal joint 10, so that the wall section 9 consists of a first part 11 and a second part 12, each one of these two parts 11 and 12 displaying a configuration which corresponds to the configuration of half of the remaining wall sections 1-5. In such instance, the surfaces of the divided wall section 9 turned to face towards one another are substantially radial in the cross section of the duct, and thereby approximately at right angles or approximately transversely directed in relation to the inner surface of the duct on the divided wall section 9.

In the longitudinal joint 10 between the two parts 11 and 12 of the divided wall section 9, there is disposed a longitudinal rigidifying- and joint element 14 which, in the illustrated embodiment, displays a T-shaped cross section, where the transverse cross of the T is located on the outside of the two parts 11 and 12 of the divided wall section 9. The upright in the T-shaped cross section is located in the joint 10 and may, as is apparent from Fig. 2, extend only partly across the thickness of the divided wall section 9, whereby thermal transfer through the duct wall is reduced, in particular if the rigidifying- and joint element 14 is manufactured of metal. The reverse positioning of the rigidifying- and joint element 14 is also possible.

On the inside of the joint 10, there is provided a sealing strip 15, which prevents gases located interiorly in the duct from penetrating into the fibre material of the divided wall section 9. Correspondingly, there is disposed on the outside of the joint 10 an outer sealing strip 16 which is fixed on either side of the rigidifying- and joint element 14 on the outside of the divided wall element 9. The two sealing strips 15 and 16 may be employed for uniting the divided wall section 9 in the joint region, but in addition a glue union may also be used between the wall section and the rigidifying- and joint element. In view of possible fire safety classification, the two strips 15 and 16 are manufactured from a material which withstands elevated temperatures and which may be provided with a reinforcement of a refractory material, for example in fibre form.

As alternative to one or both of the sealing strips 15 and 16, inner 6 or outer sealing layers may have welded joints which close the longitudinal joint 10. A closed hose which is inflated interiorly in the duct may also be employed as an alternative to the inner sealing strip 15.

In order to prevent the joint 10 from rupturing in the event of fire, mechanical connecting devices may be employed which extend through the joint 10 and which extend into both parts 11 and 12 of the wall section 9 and anchored there. In addition to such connecting devices, a sealing material which expands in the event of a fire may be disposed in the joint 10.

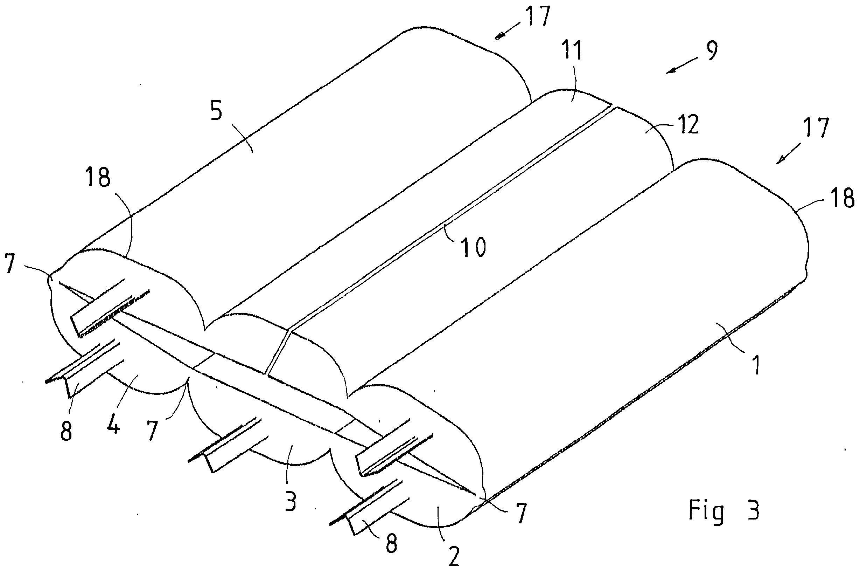

The duct illustrated in Figs. 1 and 2 has a cross section formed as a regular hexagon. Since the fold- or joint lines 7 are flexible and may function as joints between neighbouring wall sections, the duct illustrated in these figures may be flattened out as is apparent from Fig. 3. In such instance, the wall sections 1, 9 and 5 will lie above the wall sections 2, 3 and 4. This implies that the duct under consideration here may be stored and transported in extremely compact state. Further, the compressed state makes for a simpler cutting of the duct into pertinent lengths.

The duct according to Figs. 1-3 is suitably manufactured in the totally laid out, planar state so that all wall sections 1-5 and 9 lie side by side, the divided wall section 9 may in such instance have its first and second parts 11 and 12, respectively, located on opposing sides of the thus laid out duct.

In an alternative method of manufacture, use is made of a core whose outer configuration closely corresponds to the inner configuration of the finished duct. On this core, which may be heated, the fibre layers which are to form the wall sections and fold- and joint lines of the duct are then laid, whereafter the duct is compressed. The longitudinal rigidifying elements are placed between two fibre layers prior to the compression operation.

One embodiment (not shown on the Drawings) which may also be manufactured in the fully laid open, planar state, may have a longitudinal joint disposed at one of the longitudinal fold- or joint lines 7. Suitably, such an embodiment lacks the longitudinal joint 10 which divides one of the wall sections in the centre.

The duct illustrated in Figs. 1-3 has six wall sections 1-5 and 9 of in principle equal width. This implies that the hexagonal cross section is not the only cross section which may be achieved using this design and construction. A rectangular cross section may also be achieved where the longitudinal sides of the cross section consist of two wall sections located side by side and the short sides consist of but a single wall section. Of particular importance in such an embodiment is that the wall sections included in the longitudinal sides of the cross section display the longitudinal rigidifying elements 8 or possibly 14, this in view of the fact that the duct must be able also to withstand partial vacuum without being compressed together possibly to collapse.
In lesser duct dimensions, in lesser partial vacuum and in particular in hexagonal cross sections, it may be possible to dispense with one or more of the longitudinal rigidifying elements 8.

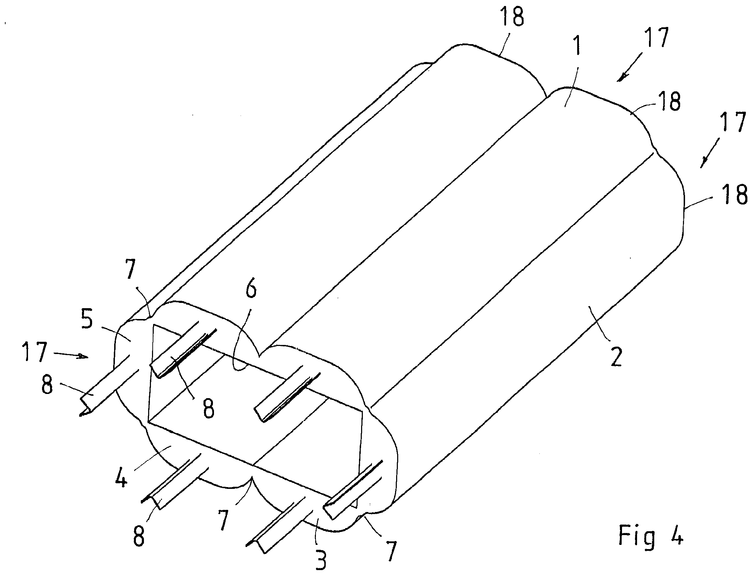

Fig. 4 shows an alternative embodiment of the duct according to the present invention. This embodiment is particularly advantageous as regards fire safety, since there are no longitudinal joints. The greatest difference vis-à-vis the above-described embodiments resides in the fact that the duct, already from the outset, is manufactured with a closed conduit form. The division into wall sections 1-5 and fold- or joint lines 7 lying there between corresponds to that described above.

In the manufacture of such an embodiment, layers or webs of fibres and binder agent are wound up on a heated core, whereafter applied material is compressed from the outside. During the winding-on of the material, the longitudinal rigidifying elements 8 are placed in the material before the outermost layers are wound on. This implies that, in the subsequent compression operation, there will be obtained a good degree of adhesion between the fibre material and the rigidifying elements. Longitudinal positioning of the layers or the webs is also possible.

In those cases where the manufacture of a duct, both with and without longitudinal joints, takes place on a core, one or more jointed or deformable rings, formed in response to the cross sectional configuration of the duct, may be baked in transversely of the longitudinal direction of the duct, in or close to the fibre material. Such a ring may either be employed independently of the longitudinal rigidifying elements 8 or in combination with them. In those cases where the ring is applied on or in a duct which is manufactured on a form-defining core, the ring may, in the radial direction, be positioned quite freely. However, in combination with longitudinal rigidifying elements 8, it should be placed radially inside them. In those cases where the duct has a longitudinal joint, these rings may be open and, at their mutually meeting ends, be provided with connecting devices for interconnection in the region of the longitudinal joints.

Circumferential rigidifying elements in the form of rings in the finished state of the duct may also be employed in the duct which is manufactured in the planar, spread out state. In such designs, it is important that the transverse rigidifying elements are flexible or that they have joints in the regions of the fold- or joint lines 7 of the duct in order for the duct to be able to be raised or folded up to the intended final configuration. Further, the transverse rigidifying elements have, at their ends, connecting devices for interconnecting of the longitudinal rigidifying elements to a closed annular form in the region of the longitudinal joints of the duct.

In embodiments where the transverse rigidifying element is bent or is provided with joints, it should be positioned as close to the centre of the duct as possible in order, as far as is possible, to avoid shearing between the fibre material and the rigidifying element.

Of particular importance are the four longitudinal rigidifying elements 8 which are placed centrally in the longitudinal wall sections which form the longitudinal sides in the duct cross section. Without these longitudinal rigidifying elements, the duct would probably, if it is objected to an outer excess pressure, collapse so that the longitudinal sides of the cross section are pressed in to the duct cross section. On the other hand, the two longitudinal rigidifying elements which are disposed centrally in the short sides of the cross section may possibly be dispensed with.

In all Drawing figures, the longitudinal rigidifying elements 8 are shown as placed approximately centrally in the thickness direction of the wall sections 1-5. Other positionings, both further out in the radial direction and further in towards the flow area of the duct, are however possible.

## Claims

1. A duct comprising a number of longitudinal wall sections (1-5, 9) at least partly produced from a refractory fibre material and binder agent, and which together define a closed, elongate flow space, mutually meeting wall sections being united with one another by the intermediary of a fold- or joint line (7), wherein the wall sections (1-5) between adjacent fold- or joint lines (7) have longitudinal, thickened and outwardly bulging portions (17), **characterised in that** there are disposed, in the fibre material and binder agent of the wall sections (1-5), in the longitudinal, thickened and outwardly bulging portions (17), longitudinal rigidifying elements (8).

2. The duct as claimed in Claim 1, **characterised in that** it has transverse, preferably annular rigidifying elements in or proximal to the fibre material and binder agent of the duct.

3. The duct as claimed in Claim 1 or 2, **characterised in that** it is produced starting from at least one evenly-thick web with one or more layers of fibre material and binder agent, the web having been compressed, and the degree of compression being greater in the fold- or joint lines (7) than is the case in the thickened portions (17).

4. The duct as claimed in any of Claims 1 to 3, **characterised in that** the external (18) and internal surfaces of the wall sections (1-5, 9) are smooth and that the external surfaces are convex, arched outwards.

5. The duct as claimed in any of Claims 1 to 4, **characterised in that** in the interior, the duct has substantially planar surfaces which have a sealing layer (6) which also covers the fold- or joint lines (7).

6. The duct as claimed in any of Claims 1 to 5, **characterised in that** at least one wall section (9) has a longitudinal joint (10) and that, in the region of the joint, there is disposed a longitudinal rigidifying- and joint element (14).

7. The duct as claimed in Claim 6, **characterised in that** the rigidifying- and joint element (14) is of substantially T- or H-shaped cross section, and that the joint, at least towards the interior of the duct, has a covering and sealing strip (15).

8. The duct as claimed in any of Claims 1 to 7, **characterised in that** each thickened portion (17) has at least one longitudinal rigidifying element (8).

9. The duct as claimed in any of Claims 1 to 8, **characterised in that** the longitudinal rigidifying elements (8) include elongate profiles with V-shaped cross section, manufactured of metal.

10. The duct as claimed in any of Claims 1 to 9, **characterised in that** the longitudinal thickened portions (17) have a thickness of the order of magnitude of 20-40 % of the width of a wall section (1-5, 9).

11. A method of manufacturing a duct with a number of longitudinal wall sections (1-5, 9) and between pairwise of these wall sections longitudinal fold- or joint lines (7), the duct being manufactured from binder agent and at least one web composed of one or more layers or refractory fibre material, which is compressed, **characterised in that** the duct is manufactured in the spread-out planar state, that the wall sections (1-5, 9) between adjacent fold- or joint lines (7) are given longitudinal, thickened portions (17), there are disposed longitudinal rigidifying elements (8) in the thickened portions (17), that those wall sections (9) which are located along opposing edges of the spread-out duct, are given a configuration which corresponds to the configuration of half of the remaining wall sections (1-5), whereby the duct, after raising to the intended cross sectional configuration by bending of the fold- or joint lines (7) will have a longitudinal joint (10) where the half wall sections (11, 12) meet one another.

12. The method as claimed in Claim 11, **characterised in that**, in the region of the longitudinal joint (10) of the duct, there is placed a longitudinal rigidifying- and joint element (14).

13. A method of manufacturing a duct with a number of longitudinal wall sections (1-5) and between pairwise of these wall sections longitudinal fold- or joint lines (7), the duct being manufactured from binder agent and at least one web composed of one more layers of refractory fibre material, which is compressed, **characterised in that** at least one web of fibres and binder agent is wound about or applied longitudinally on a core, so that a tubular configuration is formed, that the web or the webs are compressed from outside so that a number of longitudinal, thickened portions (17) are formed on either side of each fold- or joint line (7), wherein the wall sections (1-5) in the binder agent and the fibre material, are provided with one or more longitudinal rigidifying elements (8).

14. The method as claimed in Claim 13, **characterised in that** the longitudinal rigidifying elements (8) are placed in the central regions of the wall sections (1-5) seen in the width direction of the wall sections.

## Patentansprüche

1. Kanal, der eine Anzahl von längs verlaufenden Wandabschnitten (1-5, 9) aufweist, die zumindest teilweise aus einem feuerfesten Fasermaterial und Bindemittel hergestellt sind, und die zusammen einen geschlossenen länglichen Fließraum definieren, wobei aufeinandertreffende Wandabschnitte mittels einer Falz- oder Fugenlinie (7) miteinander verbunden sind, wobei die Wandabschnitte (1-5) zwischen benachbarten Falz- oder Fugenlinien (7) längs verlaufende verdickte und nach außen gewölbte Teilabschnitte (17) haben, **dadurch gekennzeichnet, dass** im Fasermaterial und Bindemittel der Wandabschnitte (1-5) in den längs verlaufenden verdickten und nach außen gewölbten Teilabschnitten (17) längs verlaufende Versteifungselemente (8) angeordnet sind.

2. Kanal nach Anspruch 1, **dadurch gekennzeichnet, dass** er quer verlaufende, vorzugsweise ringförmige Versteifungselemente in oder nahe dem Fasermaterial und Bindemittel des Kanals hat.

3. Kanal nach Anspruch 1 oder 2, **dadurch gekennzeichnet, dass** er ausgehend von mindestens einer gleichmäßig dicken Bahn mit einer oder mehreren Schichten von Fasermaterial und Bindemittel hergestellt wird, wobei die Bahn komprimiert wurde, und der Komprimierungsgrad in den Falz- oder Fugenlinien (7) höher ist als in den verdickten Teilabschnitten (17).

4. Kanal nach einem der Ansprüche 1 bis 3, **dadurch gekennzeichnet, dass** die Außen- (18) und Innenflächen der Wandabschnitte (1-5, 9) glatt sind, und dass die Außenflächen konvex nach außen gebogen sind.

5. Kanal nach einem der Ansprüche 1 bis 4, **dadurch gekennzeichnet, dass** der Kanal innen im Wesentlichen ebene Flächen hat, die eine Dichtungsschicht (6) haben, die auch die Falz- oder Fugenlinien (7) bedeckt.

6. Kanal nach einem der Ansprüche 1 bis 5, **dadurch gekennzeichnet, dass** mindestens ein Wandabschnitt (9) eine längs verlaufende Fuge (10) hat, und dass im Bereich der Fuge ein längs verlaufendes Versteifungs- und Fugenelement (14) angeordnet ist.

7. Kanal nach Anspruch 6, **dadurch gekennzeichnet, dass** das Versteifungs- und Fugenelement (14) einen im Wesentlichen T- oder H-förmigen Querschnitt hat, und dass die Fuge, zumindest zum Inneren des Kanals hin, einen Abdeckungs- und Dichtungsstreifen (15) hat.

8. Kanal nach einem der Ansprüche 1 bis 7, **dadurch gekennzeichnet, dass** jeder verdickte Teilabschnitt (17) mindestens ein längs verlaufendes Versteifungselement (8) hat.

9. Kanal nach einem der Ansprüche 1 bis 8, **dadurch gekennzeichnet, dass** die längs verlaufenden Versteifungselemente (8) längliche Profile mit V-förmigem Querschnitt umfassen, die aus Metall hergestellt sind.

10. Kanal nach einem der Ansprüche 1 bis 9, **dadurch gekennzeichnet, dass** die längs verlaufenden verdickten Teilabschnitte (17) eine Dicke in der Größenordnung von 20-40% der Breite eines Wandabschnitts (1-5, 9) haben.

11. Verfahren zur Herstellung eines Kanals mit einer Anzahl von längs verlaufenden Wandabschnitten (1-5, 9) und zwischen Paaren von diesen Wandabschnitten längs verlaufenden Falz- oder Fugenlinien (7), wobei der Kanal aus Bindemittel und mindestens einer Bahn hergestellt wird, die aus einer oder mehreren Schichten von feuerfestem Fasermaterial besteht, das komprimiert ist, **dadurch gekennzeichnet, dass** der Kanal im ausgebreiteten ebenen Zustand hergestellt wird, dass den Wandabschnitten (1-5, 9) zwischen benachbarten Falz- oder Fugenlinien (7) längs verlaufende verdickte Teilabschnitte (17) gegeben werden, dass längs verlaufende Versteifungselemente (8) in den verdickten Teilabschnitten (17) angeordnet werden, dass den Wandabschnitten (9), die sich entlang gegenüberliegender Kanten des ausgebreiteten Kanals befinden, eine Konfiguration verliehen wird, die der Konfiguration der Hälfte der verbleibenden Wandabschnitte (1-5) entspricht, wobei der Kanal, nach dem Anheben auf die beabsichtigte Querschnittskonfiguration durch Biegen der Falz- oder Fugenlinien (7), eine längs verlaufende Fuge (10) hat, an der die halben Wandabschnitte (11, 12) aufeinander treffen.

12. Verfahren nach Anspruch 11, **dadurch gekennzeichnet, dass** im Bereich der längs verlaufenden Fuge (10) des Kanals ein längs verlaufendes Versteifungs- und Fugenelement (14) angeordnet ist.

13. Verfahren zur Herstellung eines Kanals mit einer Anzahl von längs verlaufenden Wandabschnitten (1-5) und mit zwischen Paaren dieser längs verlaufenden Wandabschnitte längs verlaufenden Falz- oder Fugenlinien (7), wobei der Kanal aus Bindemittel und mindestens einer Bahn bestehend aus einer oder mehreren Schichten von feuerfestem Fasermaterial hergestellt wird, das komprimiert ist, **dadurch gekennzeichnet, dass** mindestens eine Bahn von Fasern und Bindemittel um einen Kern gewunden oder in Längsrichtung darauf aufgebracht wird, so dass eine rohrförmige Konfiguration gebildet wird, dass die Bahn oder die Bahnen von außen komprimiert werden, so dass eine Anzahl von längs verlaufenden verdickten Teilabschnitten (17) auf beiden Seiten jeder Falz- oder Fugenlinie (7) gebildet werden, wobei die Wandabschnitte (1-5) aus dem Bindemittel und dem Fasermaterial mit einem oder mehreren längs verlaufenden Versteifungselementen (8) versehen werden.

14. Verfahren nach Anspruch 13, **dadurch gekennzeichnet, dass** die längs verlaufenden Versteifungselemente (8) in den zentralen Bereichen der Wandabschnitte (1-5) gesehen in der Breitenrichtung der Wandabschnitte angeordnet sind.

## Revendications

1. Conduit comprenant un certain nombre de sections de paroi longitudinales (1-5, 9) produites au moins partiellement à partir d'un matériau fibreux réfractaire et d'un agent liant, et qui définissent ensemble un espace d'écoulement clos, allongé, réunissant mutuellement les sections de paroi qui sont unies entre elles par l'intermédiaire d'une ligne de pliage ou de joint (7), dans lequel les sections de paroi (1-5) entre les lignes de pliage ou de joint (7) adjacentes ont des parties longitudinales, épaissies et se renflant vers l'extérieur (17), **caractérisé en ce que** l'on dispose, dans le matériau fibreux et l'agent liant des sections de paroi (1-5), dans les parties longitudinales, épaissies et se renflant vers l'extérieur (17), des éléments de rigidification longitudinaux (8).

2. Conduit selon la revendication 1, **caractérisé en ce qu'**il a des éléments de rigidification transversaux, de préférence annulaires dans ou à proximité du matériau fibreux et de l'agent liant du conduit.

3. Conduit selon la revendication 1 ou 2, **caractérisé en ce qu'**il est produit, à partir d'au moins une bande à épaisseur régulière avec une ou plusieurs couches de matériau fibreux et d'agent liant, la bande ayant été comprimée, et le degré de compression étant plus important dans les lignes de pliage ou de joint (7) que dans les parties épaissies (17).

4. Conduit selon l'une quelconque des revendications 1 à 3, **caractérisé en ce que** les surfaces externes (18) et internes des sections de paroi (1-5, 9) sont lisses et **en ce que** les surfaces externes sont convexes, arquées vers l'extérieur.

5. Conduit selon l'une quelconque des revendications 1 à 4, **caractérisé en ce qu'**à l'intérieur, le conduit a des surfaces sensiblement planaires qui ont une couche d'étanchéité (6) qui recouvre également les lignes de pliage ou de joint (7).

6. Conduit selon l'une quelconque des revendications 1 à 5, **caractérisé en ce qu'**au moins une section de paroi (9) a un joint longitudinal (10) et **en ce que**, dans la région du joint, on dispose un élément longitudinal de rigidification et de joint (14).

7. Conduit selon la revendication 6, **caractérisé en ce que** l'élément de rigidification et de joint (14) a une section transversale sensiblement en forme de T ou de H, et **en ce que** le joint, au moins vers l'intérieur du conduit, a une bande de recouvrement et d'étanchéité (15).

8. Conduit selon l'une quelconque des revendications 1 à 7, **caractérisé en ce que** chaque partie épaissie (17) a au moins un élément de rigidification longitudinal (8).

9. Conduit selon l'une quelconque des revendications 1 à 8, **caractérisé en ce que** les éléments de rigidification longitudinaux (8) comprennent des profilés allongés avec une section transversale en forme de V, fabriqués à partir de métal.

10. Conduit selon l'une quelconque des revendications 1 à 9, **caractérisé en ce que** les parties épaissies longitudinales (17) ont une épaisseur de l'ordre de 20-40 % de la largeur d'une section de paroi (1-5, 9).

11. Procédé pour fabriquer un conduit avec un certain nombre de sections de paroi longitudinales (1-5, 9) et entre chaque paire de ces sections de paroi, des lignes de pliage ou de joint longitudinales (7), le conduit étant fabriqué à partir d'un agent liant et d'au moins une bande composée d'une ou de plusieurs couches de matériau fibreux réfractaire, qui est comprimée, **caractérisé en ce que** le conduit est fabriqué à l'état planaire étalé, **en ce que** les sections de paroi (1-5, 9) entre les lignes de pliage ou de joint (7) adjacentes bénéficient des parties longitudinales, épaissies (17), on dispose des éléments de rigidification longitudinaux (8) dans les parties épaissies (17), **en ce que** ces sections de paroi (9) qui sont positionnées le long des bords opposés du conduit étalé, bénéficient d'une configuration qui correspond à la configuration de la moitié des sections de paroi (1-5) résiduelles, moyennant quoi le conduit, après être parvenu à la configuration transversale prévue en pliant les lignes de pliage ou de joint (7), a un joint longitudinal (10) où les demi-sections de paroi (11, 12) se rencontrent.

12. Procédé selon la revendication 11, **caractérisé en ce que**, dans la région du joint longitudinal (10) du conduit, on place un élément de rigidification et de joint longitudinal (14).

13. Procédé pour fabriquer un conduit avec un certain nombre de sections de paroi longitudinales (1-5) et entre chaque paire de ces sections de paroi, des lignes de pliage ou de joint longitudinales (7), le conduit étant fabriqué à partir d'un agent liant et d'au moins une bande composée d'une ou de plusieurs couches de matériau fibreux réfractaire, qui est comprimée, **caractérisé en ce qu'**au moins une bande de fibre et d'agent liant est enroulée autour ou appliquée longitudinalement sur un noyau, de sorte qu'une configuration tubulaire est formée, **en ce que** la bande ou les bandes sont comprimées depuis l'extérieur de sorte qu'un certain nombre de parties longitudinales épaissies (17) sont formées de chaque côté de chaque ligne de pliage ou de joint (7), dans lequel les sections de paroi (1-5) dans l'agent liant et le matériau fibreux, sont prévues avec un ou plusieurs éléments de rigidification longitudinaux (8).

14. Procédé selon la revendication 13, **caractérisé en ce que** les éléments de rigidification longitudinaux (8) sont placés dans les régions centrales des sections de paroi (1-5) observées dans le sens de la largeur des sections de paroi.
